# EUROPEAN PATENT APPLICATION

(11) **EP 4 769 773 A1**
(43) Date of publication of application: **01.07.2026**
(21) Application number: 25841374.9
(22) Date of filing: 11.07.2025
(51) Int. Cl.: H01M 50/383, H01M 50/342, H01M 50/367, H01M 50/317, H01M 50/249

(54) **BATTERY PACK AND VEHICLE INCLUDING SAME**

(30) Priority: 17.07.2024 KR 20240094190
(71) Applicant: LG Energy Solution, Ltd., Seoul 07335 (KR)
(72) Inventor: PARK, Min-Soo, Daejeon 34122 (KR); JUNG, Hye-Mi, Daejeon 34122 (KR); KIM, Kwang-Mo, Daejeon 34122 (KR); LEE, Jung-Hoon, Daejeon 34122 (KR)
(74) Representative: Plasseraud IP
(86) International application number: PCT/KR2025/010182
(87) International publication number: WO 2026/019173

(57) **Abstract**

Disclosed is a battery pack and a vehicle including the same. The battery pack includes a plurality of battery cells; a pack case configured to accommodate the plurality of battery cells; and a fireproofing member coupled to the battery cells and having a discharge portion formed therein.

## Description

### TECHNICAL FIELD

This application is based on and claims priority from Korean Patent Application No. 10-2024-0094190, filed on July 17, 2024, with the Korean Intellectual Property Office, the disclosure of which is incorporated herein in its entirety by reference.

The present disclosure relates to a battery pack and a vehicle including the same, and more specifically, to a battery pack capable of performing directional venting of flame, gas or high-temperature particles, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

That is, various types of secondary batteries may be provided with a module case capable of protecting battery cells, and include a battery module in which a plurality of battery cells are stacked and inserted into the module case, and a battery pack including a plurality of battery modules.

Alternatively, the battery module may not have a module case, and the battery cells may be arranged directly inside the battery pack.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Specifically, when a thermal event occurs in at least one of a plurality of battery cells, gas and high-temperature particles (e.g., high-temperature sparks) are generated. Here, if the gas is not discharged to the outside of the battery pack, the internal pressure and temperature increase, and heat transfer to adjacent battery cells within the battery pack may be accelerated.

For example, if gas is not discharged to the outside of the battery pack and meets high-temperature particles inside the battery pack, the gas explodes and a flame is generated. If the flame spreads to neighboring battery cells, the chain reaction of the flame may cause the entire battery cells or battery pack to be damaged or explode, and as a result, there is a problem in that the stability of the battery cells or battery pack cannot be secured.

Alternatively, flame, gas, or high-temperature particles may move in various directions within the pack case of the battery pack and flow back toward the battery cells where the thermal event has occurred. This may result in a thermal runaway phenomenon, and if the flame leaks out due to the thermal runaway phenomenon, the driver of an electric vehicle may suffer burns or be in a dangerous situation.

### DISCLOSURE

### Technical Problem

Therefore, the present disclosure is directed to providing a battery pack that allows flame, gas, or high-temperature particles generated by ignition in a battery cell to be discharged in a preset direction (directional venting), and a vehicle including the same.

In addition, the present disclosure is directed to providing a battery pack that may prevent serial thermal runaway and improve the stability of battery cells through directional venting of flame, gas, or high-temperature particles, and a vehicle including the same.

In addition, the present disclosure is directed to providing a battery pack that allows the heat caused by flame to be evenly spread within the battery pack to prevent heat concentration and thereby have a uniform thermal distribution when a flame is generated from one battery cell, and a vehicle including the same.

In addition, the present disclosure is directed to providing a battery pack that may prevent flame, gas, or high-temperature particles from flowing back toward battery cells and prevent flame, gas, or high-temperature particles from being transferred or propagated to other battery cells, and a vehicle including the same.

However, the technical problems to be solved by the present disclosure are not limited to the above, and other problems not mentioned herein will be clearly understood by those skilled in the art from the following description.

### Technical Solution

In an embodiment, there is provided a battery pack comprising: a plurality of battery cells; a pack case configured to accommodate the plurality of battery cells; and a fireproofing member coupled to the battery cells and having a discharge portion formed therein.

In an embodiment, the fireproofing member may include a first fireproofing sheet coupled to the battery cell and having a first discharge portion formed therein; and a second fireproofing sheet coupled to the first fireproofing sheet and having a second discharge portion formed therein at a location spaced apart from the first discharge portion.

In an embodiment, the first discharge portion and the second discharge portion may be formed in the first fireproofing sheet and the second fireproofing sheet, respectively, at opposite positions.

In an embodiment, based on a cross-section of the fireproofing member, the first discharge portion may be located at a right side, and the second discharge portion may be located at a left side rather than the first discharge portion.

In an embodiment, based on a cross-section of the fireproofing member, the first discharge portion may be located at a left side, and the second discharge portion may be located at a right side rather than the first discharge portion.

In an embodiment, the first discharge portion and the second discharge portion may be configured to have different shapes.

In an embodiment, the second discharge portion may be formed to allow gas venting by rupturing when a thermal event occurs, and the second discharge portion may be configured such that a part of the second discharge portion guides a movement of gas when the second discharge portion ruptures.

In an embodiment, the second discharge portion may include a notching portion formed to rupture when a thermal event occurs; and a guide portion deformed to be inclined to guide the movement of the gas when the notching portion ruptures.

In an embodiment, the pack case may include an upper frame, a gas movement channel configured to discharge gas may be formed between the upper frame and the second fireproofing sheet, and, when a thermal event occurs, the guide portion may deform and come into contact with the upper frame.

In an embodiment, the notching portion may include a reference line portion formed on the second fireproofing sheet; and an extension portion extending from both ends of the reference line portion at a preset angle.

In an embodiment, the second discharge portion may include a cutting portion formed on the second fireproofing sheet; and a guide portion deformed to be inclined relative to the cutting portion to guide the movement of the gas when a thermal event occurs.

In an embodiment, the pack case may include an upper frame, a gas movement channel configured to discharge gas may be formed between the upper frame and the second fireproofing sheet, and, when a thermal event occurs, the guide portion may deform and come into contact with the upper frame.

In an embodiment, the cutting portion may include a reference line portion formed on the second fireproofing sheet; and an extension portion extending from both ends of the reference line portion at a preset angle.

In an embodiment, the first discharge portion may be formed as a notching portion or a cutting portion formed in a straight or dotted line shape.

In an embodiment, the pack case may have a venting portion formed thereon.

In an embodiment, the venting portion may include a venting hole through which gas generated from the battery cell is discharged; and a venting valve configured to close the venting hole and be opened when an internal pressure of the pack case exceeds a preset value.

In an embodiment, a gas movement channel configured to discharge gas may be formed between the pack case and the fireproofing member, and the gas may move to the venting portion through the gas movement channel.

Meanwhile, according to another aspect of the present disclosure, there may be provided a vehicle including at least one battery pack described above.

### Advantageous Effects

The embodiments of the present disclosure have the effect of allowing flame, gas or high-temperature particles generated by ignition in a battery cell to be discharged in a preset direction (directional venting).

In addition, the present disclosure has the effect of preventing serial thermal runaway and improving the stability of battery cells through directional venting of flame, gas or high-temperature particles.

In addition, the present disclosure has the effect of allowing the heat caused by flame to be evenly spread within the battery pack to prevent heat concentration and thereby have a uniform thermal distribution when a flame is generated from one battery cell.

In addition, the present disclosure has the effect of preventing flame, gas, or high-temperature particles from flowing back toward battery cells and preventing flame, gas, or high-temperature particles from being transferred or propagated to other battery cells.

However, the effects that can be obtained through the present disclosure are not limited to the above, and other technical effects are not mentioned herein will be clearly understood by those skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing an entire battery pack according to an embodiment of the present disclosure.
FIG. 2 is an exploded view showing a battery cell, a fireproofing member, and a cover in the battery pack according to an embodiment of the present disclosure.
FIG. 3 is a drawing showing the battery cell, the fireproofing member, and the cover of FIG. 2 in an assembled state.
FIG. 4 is a view taken along the direction A of FIG. 3.
FIG. 5 is a drawing showing the first fireproofing sheet and the battery cell of FIG. 4 in an assembled state, with the cover and the second fireproofing sheet removed.
FIG. 6 is a cross-sectional view taken along line B-B' of FIG. 4.
FIG. 7 is a drawing showing that flame, gas, or high-temperature particles are discharged since a thermal event occurs in FIG. 6.
FIG. 8 is an enlarged view showing a modified embodiment of FIG. 6.
FIG. 9 is a drawing showing a venting portion in the battery pack according to an embodiment of the present disclosure.
FIG. 10 is a drawing showing a venting hole in the venting portion of FIG. 9.
FIG. 11 is a drawing showing that a gas moves through a gas movement channel to the venting portion in the battery pack according to an embodiment of the present disclosure.
FIG. 12 is an exploded perspective view showing a battery module accommodated within a battery pack according to another embodiment of the present disclosure.
FIG. 13 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

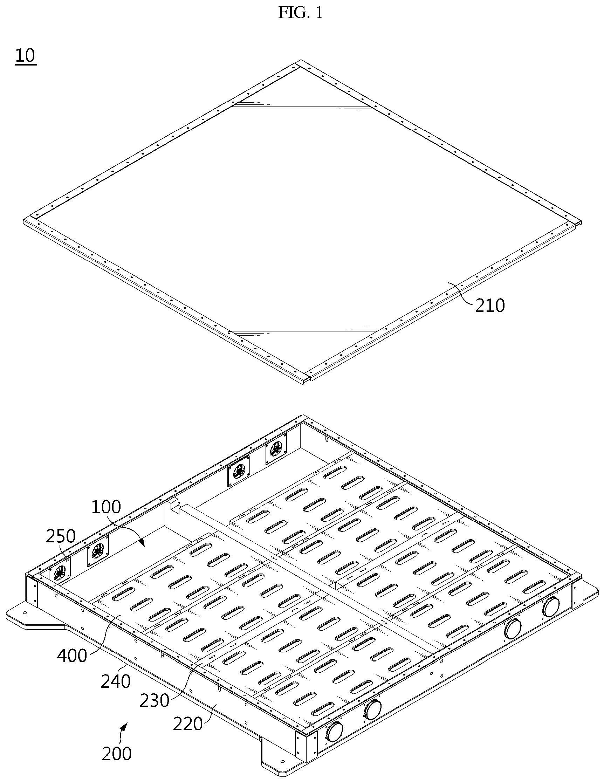

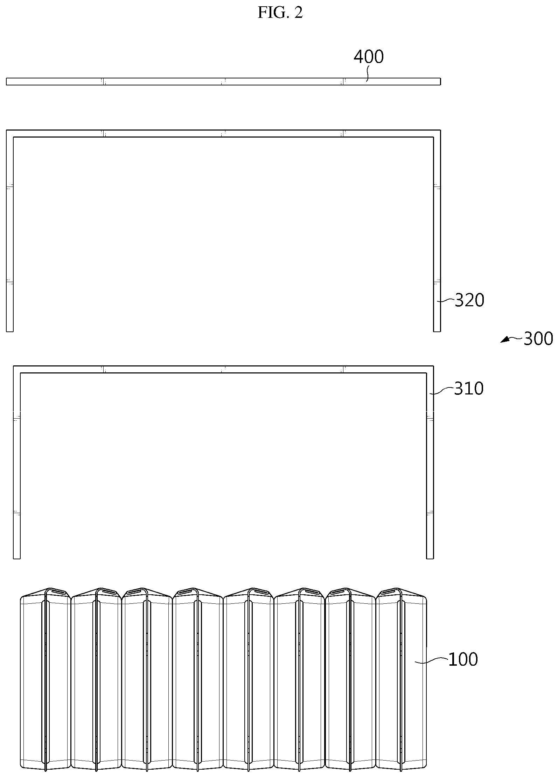

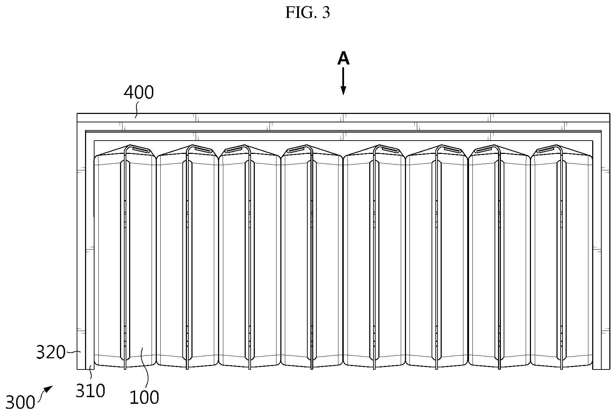

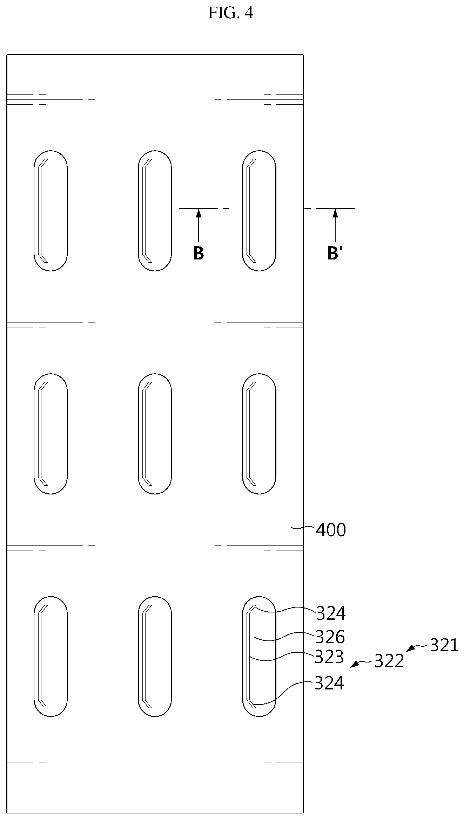

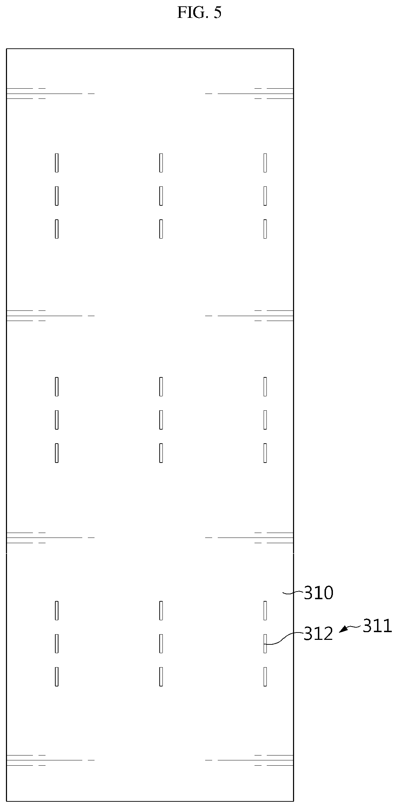

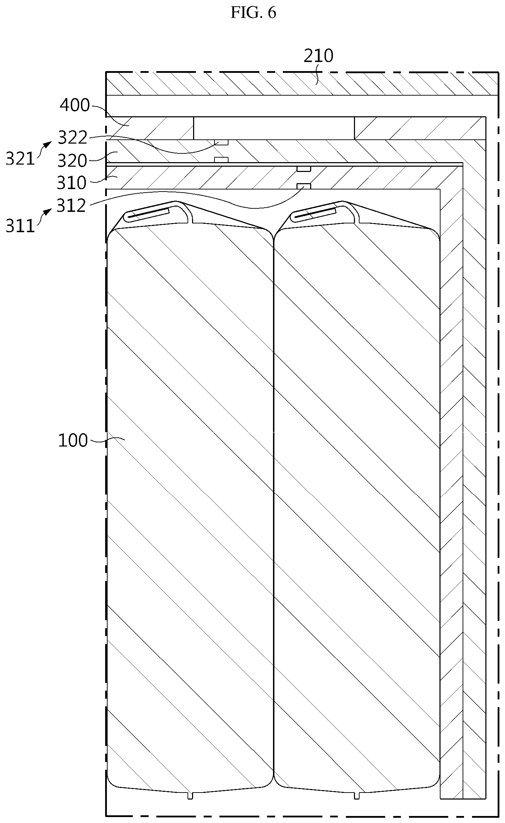

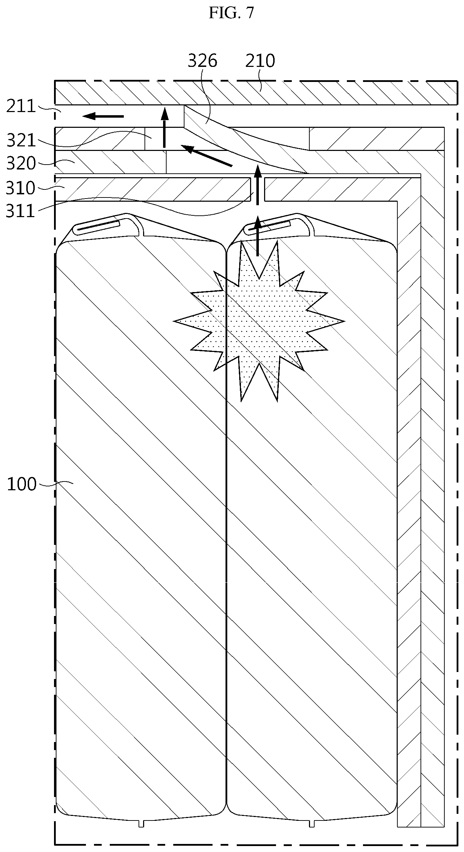

FIG. 1 is a perspective view showing an entire battery pack according to an embodiment of the present disclosure, FIG. 2 is an exploded view showing a battery cell, a fireproofing member, and a cover in the battery pack according to an embodiment of the present disclosure, FIG. 3 is a drawing showing the battery cell, the fireproofing member, and the cover of FIG. 2 in an assembled state, FIG. 4 is a view taken along the direction A of FIG. 3, FIG. 5 is a drawing showing the first fireproofing sheet and the battery cell of FIG. 4 in an assembled state, with the cover and the second fireproofing sheet removed, FIG. 6 is a cross-sectional view taken along line B-B' of FIG. 4, and FIG. 7 is a drawing showing that flame, gas, or high-temperature particles are discharged since a thermal event occurs in FIG. 6.

Referring to FIGS. 1 to 3, a battery pack 10 according to an embodiment of the present disclosure includes a plurality of battery cells 100, a pack case 200, and a plurality of fireproofing members 300.

The types of battery cell 100 may vary. For example, the battery cell 100 may include at least one of a pouch-type battery cell 100, a cylindrical battery cell 100, and a rectangular battery cell 100. However, for convenience of explanation, the following description focuses on the case where the battery cell 100 is a pouch-type battery cell 100.

The plurality of battery cells 100 may be stacked. The battery cells 100 may have various structures, and further, the plurality of battery cells 100 may be stacked in various ways.

The battery cell 100 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 100 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 100, or the positive electrode lead and the negative electrode lead may be arranged in the same direction with respect to the longitudinal direction of the battery cell 100.

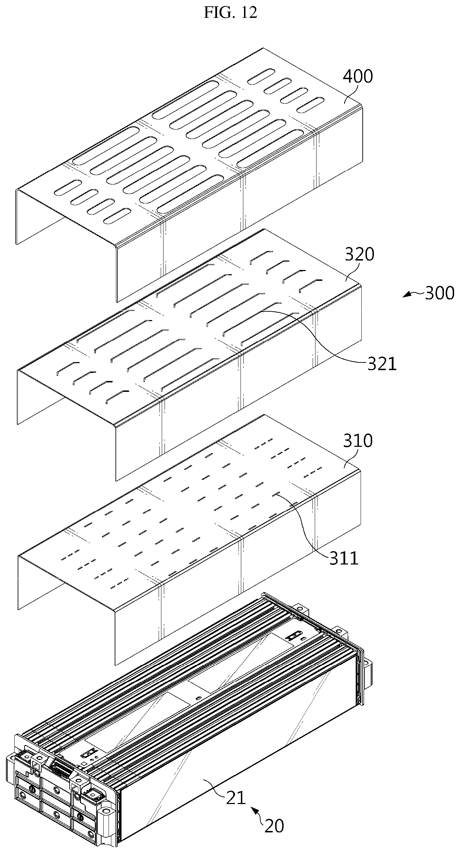

The battery cell 100 may be accommodated in a module case 21 (see FIG. 12), and the module case 21 containing the battery cell 100 may be accommodated in the pack case 200 to form a battery pack 10. However, the present disclosure is not limited thereto, and the module case 21 may be removed to reduce the weight and volume of the module case 21, and in this case, the battery cell 100 may be directly accommodated in the pack case 200 of the battery pack 10.

According to this method, more battery cells 100 may be accommodated in the space previously occupied by the module case 21 of the battery module 20 within the battery pack 10, thereby increasing space efficiency and improving battery capacity.

Hereinafter, for convenience of explanation, the case in which the battery cell 100 is directly accommodated in the pack case 200 without the module case 21 will be described first, and the case in which the pouch-type battery cell 100 of each embodiment of the present disclosure is accommodated in the module case 21 provided in the battery module 20 will be described later.

The battery cell 100 may be directly accommodated in the pack case 200 in various ways. For example, the battery cell 100 may be surrounded and supported by a cell cover (not shown). Here, the cell cover may have various shapes, and may be configured in, for example, an 'n' shape, a 'u' shape, or a '⊂' shape surrounding at least three sides of one battery cell 100. However, the present disclosure is not limited thereto.

Alternatively, as shown in FIGS. 2 and 3, the plurality of fireproofing members 300 may be configured to be directly coupled to the plurality of battery cells 100 in a state where the plurality of battery cells 100 are stacked without a cell cover. For convenience of explanation, the following description focuses on the case in which a plurality of fireproofing members 300 are coupled to a plurality of battery cells 100 in a state where the plurality of battery cells 100 are stacked.

In addition, the battery pack 10 according to this embodiment may include, for example, a control module configured to control charging and discharging of the pouch-type battery cell 100. The control module may include, for example, a battery management system (BMS) and a battery blocking unit, and may be accommodated inside the pack case 200 together with the battery cell 100.

Referring to FIG. 1, the plurality of battery cells 100 are accommodated in the pack case 200.

The pack case 200 may be configured to include, for example, an upper frame 210, a side frame 220, a barrier frame 230, and a lower frame 240.

The upper frame 210 may be coupled to the side frame 220. As a modified embodiment, the upper frame 210 may be formed integrally with the side frame 220, but is not limited thereto.

The side frame 220 may be configured to extend from an edge of the lower frame 240 toward the upper side. The side frame 220 defines the height of the pack case 200 and forms a preset space between the side frame 220 and the lower frame 240.

In addition, a plurality of battery cells 100 are mounted in the space between the side frame 220 and the lower frame 240. The side frame 220 may be provided in plurality, and referring to FIG. 1, the plurality of side frames 220 may include a long side frame having a relatively long length and a short side frame having a relatively short length. Alternatively, the lengths of the side frames 220 may all be the same.

The barrier frame 230 is coupled to the side frame 220 and the lower frame 240, respectively. In addition, the barrier frame 230 may be provided in plurality, and the plurality of battery cells 100 may be arranged between the plurality of barrier frames 230. That is, the barrier frame 230 is interposed between the plurality of battery cells 100.

The lower frame 240 is configured such that a plurality of battery modules 20 are placed thereon. The lower frame 240 may be formed in a rectangular plate shape, but is not limited thereto. The lower frame 240 forms the bottom of the pack case 200.

Referring to FIGS. 2 and 3, the fireproofing member 300 is coupled to the battery cell 100. Also, referring to FIGS. 4 and 5, a discharge portion 311, 321 through which flame, gas, or high-temperature particles may be discharged is formed in the fireproofing member 300.

The fireproofing member 300 may include a first fireproofing sheet 310 and a second fireproofing sheet 320. Referring to FIGS. 3, 5, and 6 together, the first fireproofing sheet 310 may be coupled to the battery cell 100, and a first discharge portion 311 may be formed therein. Referring to FIGS. 3, 4, and 6 together, the second fireproofing sheet 320 may be coupled to the first fireproofing sheet 310, and a second discharge portion 321 may be formed therein at a location spaced apart from the first discharge portion 311. The cover 400 may be coupled to the second fireproofing sheet 320.

The first discharge portion 311 and the second discharge portion 321 may be formed in the first fireproofing sheet 310 and the second fireproofing sheet 320, respectively, at opposing positions. For example, as in FIG. 6, the first discharge portion 311 may be positioned at the right side, and the second discharge portion 321 may be positioned at the left side rather than the first discharge portion 311 based on the cross-section of the fireproofing member 300 of FIG. 6.

Alternatively, although not shown in the drawings, the first discharge portion 311 may be positioned at the left side, and the second discharge portion 321 may be positioned at the right side rather than the first discharge portion 311 based on the cross-section of the fireproofing member 300.

In addition, when a thermal event occurs in the battery cell 100, as shown in FIG. 7, flame, gas, or high-temperature particles may move to the left through the first discharge portion 311 formed at the right side of FIG. 7 and then be discharged to the outside of the battery cell 100 through the second discharge portion 321 formed at the left side of FIG. 7.

In this way, if the first discharge portion 311 and the second discharge portion 321 are formed in the first fireproofing sheet 310 and the second fireproofing sheet 320 at opposing positions, since the first discharge portion 311 and the second discharge portion 321 are spaced apart from each other, flame, gas, or high-temperature particles may be prevented from flowing back into the battery cell 100.

Referring to FIGS. 4 and 5, the first discharge portion 311 and the second discharge portion 321 may be configured to have different shapes.

For example, referring to FIG. 5, the first discharge portion 311 may be formed in a dotted line shape. Alternatively, the first discharge portion 311 may be formed in a straight line shape. However, this is only one embodiment and is not limited thereto, and the shape of the first discharge portion 311 is not limited thereto.

In addition, referring to FIG. 4, the second discharge portion 321 may be formed as a single long straight line and short straight lines extending from both ends of the long straight line. However, this is only one embodiment, and the shape of the second discharge portion 321 is not limited thereto.

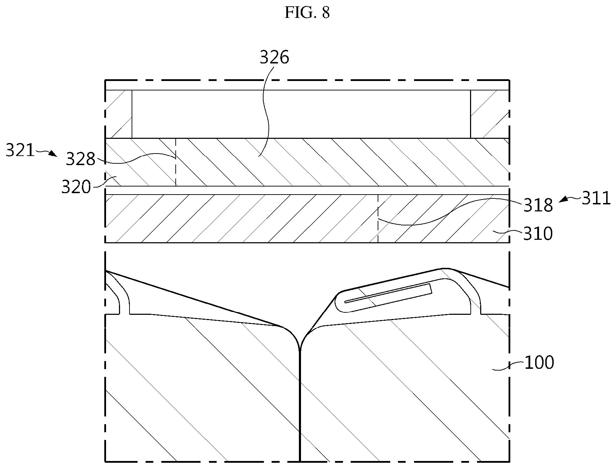

Referring to FIG. 5, the first discharge portion 311 may be configured as a notching portion 312 or a cutting portion 318 (see FIG. 8). In this way, if the first discharge portion 311 is configured as the notching portion 312 or the cutting portion 318, when the pressure of the battery cell 100 increases, the first discharge portion 311 may be opened, allowing flame, gas, or high-temperature particles to move to the second discharge portion 321 through the first discharge portion 311.

The second discharge portion 321 may be formed to enable venting of gas by rupturing when a thermal event occurs. Also, if the second discharge portion 321 is ruptured, a part of the second discharge portion 321 may be configured to guide the movement of gas.

For example, referring to FIG. 4 and FIG. 7 together, the second discharge portion 321 may include a notching portion 322 and a guide portion 326. Here, as in FIG. 6, the notching portion 322 is formed to be thinner than the surroundings so as to rupture when a thermal event occurs.

That is, if the pressure of battery cell 100 increases, the second fireproofing sheet 320 ruptures at the notching portion 322, which is formed to be thinner than the surroundings, and the second discharge portion 321 is opened. Also, flame, gas, or high-temperature particles may move through the opened second discharge portion 321.

Referring to FIG. 7, the guide portion 326 is configured to be deformed to be inclined upward with respect to FIG. 7 when the notching portion 322 is ruptured, thereby guiding the movement of gas.

For example, as shown in FIG. 7, a gas movement channel 211 through which gas may be discharged may be formed between the upper frame 210 and the second fireproofing sheet 320. Also, when a thermal event occurs, the guide portion 326 may be configured to be deformed and come into contact with the upper frame 210. In addition, when the second discharge portion 321 formed by the notching portion 322 is ruptured, the flame, gas, or high-temperature particle may only move to the left side of the gas movement channel 211 based on FIG. 7 by the guide portion 326.

By this, flame, gas or high-temperature particles generated by ignition in the battery cell 100 may be discharged in a preset direction (directional venting).

In addition, directional venting of flame, gas or high-temperature particles may prevent serial thermal runaway and improve the stability of the battery cell 100.

In addition, directional venting may prevent flame, gas or high-temperature particles from being transferred or propagated to other battery cells 100.

Referring to FIG. 4, the notching portion 322 may be configured to include a reference line portion 323 and an extension portion 324. The reference line portion 323 may be formed on the second fireproofing sheet 320. The reference line portion 323 may have various shapes, and for example, may be formed in a long straight shape. The reference line portion 323 is configured to be thinner than other portions so as to be ruptured when the pressure inside the battery cell 100 increases.

In addition, the extension portion 324 extends from both ends of the reference line portion 323 at a preset angle. The extension portion 324 may have various shapes, and for example, may be formed in a short straight shape. Like the reference line portion 323, the extension portion 324 is formed to be thinner than other portions and is configured to be ruptured when the pressure inside the battery cell 100 increases.

If the reference line portion 323 and the extension portion 324 are ruptured together due to the pressure increase of the battery cell 100, the guide portion 326 is deformed upward and comes into contact with the upper frame 210 as shown in FIG. 7.

FIG. 8 is an enlarged view showing a modified embodiment of FIG. 6.

In FIG. 8, there is a difference from the embodiment of FIG. 6 in that the first discharge portion 311 is formed as a cutting portion 318 rather than a notching portion 312, and also, the second discharge portion 321 is formed as a cutting portion 328 rather than a notching portion 322. However, the common parts with the above-described explanation may also be applied to FIG. 8.

Referring to FIG. 8, the second discharge portion 321 may include a cutting portion 328 and a guide portion 326. The cutting portion 328 may be formed on the second fireproofing sheet 320. In addition, the guide portion 326 is configured to be deformed to be inclined with respect to the cutting portion 328 when a thermal event occurs so as to guide the movement of gas. Here, since the feature that the guide portion 326 is deformed and comes into contact with the upper frame 210 when a thermal event occurs is common to the former embodiment, and thus will not be described again.

The cutting portion 328 may include a reference line portion 323 formed on the second fireproofing sheet 320 and an extension portion 324 extending at a preset angle from both ends of the reference line portion 323. Here, the reference line portion 323 and the extension portion 324 will not be described again.

In addition, the cutting portion 318 is also basically common to the aforementioned notching portion 312, and thus will not be described again.

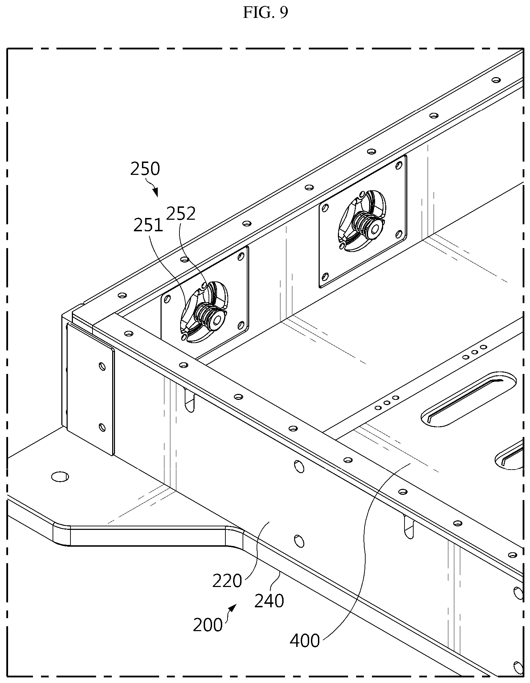

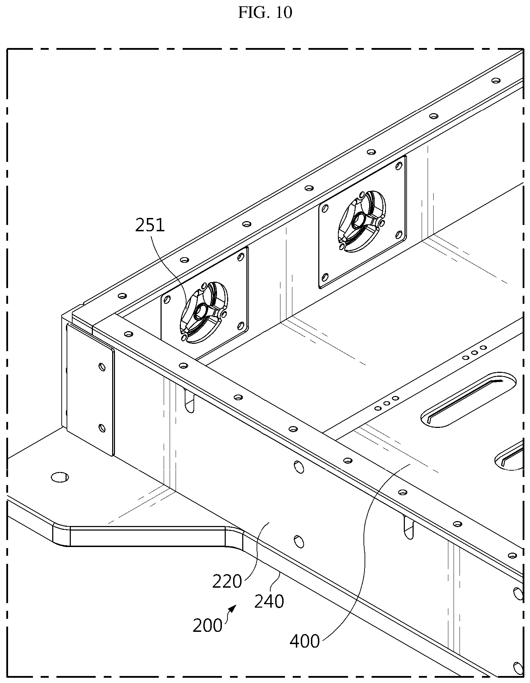

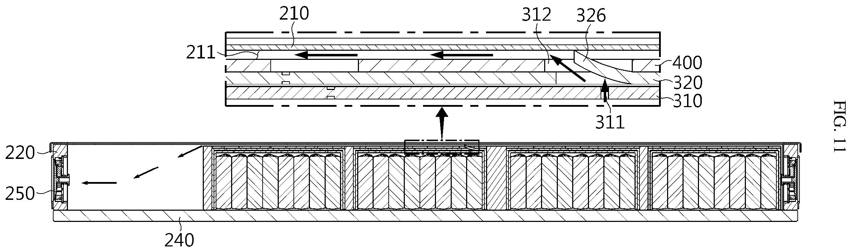

FIG. 9 is a drawing showing a venting portion in the battery pack according to an embodiment of the present disclosure, FIG. 10 is a drawing showing a venting hole in the venting portion of FIG. 9, and FIG. 11 is a drawing showing that a gas moves through a gas movement channel to the venting portion in the battery pack according to an embodiment of the present disclosure.

Referring to FIGS. 9 to 11, a venting portion 250 may be formed in the pack case 200.

The venting portion 250 may include a venting hole 251 and a venting valve 252. Referring to FIG. 10, the venting hole 251 is a hole through which gas generated from the battery cell 100 is discharged, and may be formed in the pack case 200, for example the side frame 220, but is not limited thereto.

In addition, referring to FIG. 9, a venting valve 252 may be installed at the venting hole 251. The venting valve 252 may be configured in various ways. For example, the venting valve 252 may be configured to close the venting hole 251 and be opened when the internal pressure of the pack case 200 exceeds a preset value.

That is, the venting valve 252 normally blocks the venting hole 251, but when gas leaks from the battery cell 100 and the internal pressure of the pack case 200 exceeds a preset value or range, the venting valve 252 opens and the gas is discharged from the pack case 200 through the venting hole 251.

In addition, referring to FIG. 11, a gas movement channel 211 through which gas may be discharged may be formed between the pack case 200 and the fireproofing member 300. Here, the gas is discharged from the battery cell 100 through the first discharge portion 311 and the second discharge portion 321 and moves to the venting portion 250 through the gas movement channel 211 (see the arrow in FIG. 11), and the gas moved in this way opens the venting valve 252, allowing the gas to be discharged to the outside of the pack case 200.

That is, the venting portion 250 facilitates venting, thereby providing the effect of allowing gas to be easily discharged.

In addition, when a flame is generated from one of the battery cells 100 as the heat is diffused, the heat caused by the flame is diffused evenly on the whole inside the battery pack 10 through the gas movement channel 211, thereby preventing heat concentration and thereby achieving a uniform thermal distribution.

Also, since the gas is smoothly discharged through directional venting by the gas movement channel 211, ultimately, the thermal runaway phenomenon may be prevented by preventing the flame chain reaction due to flame propagation.

FIG. 12 is an exploded perspective view showing a battery module accommodated within a battery pack according to another embodiment of the present disclosure.

Referring to FIG. 12, the battery cell 100 may be accommodated in the module case 21 of the battery module 20. Also, the fireproofing member 300 in which the discharge portion 311, 321 described above is formed may be coupled to the module case 21.

In addition, the module case 21, which accommodates the battery cells 100, may be accommodated in the pack case 200 to form the battery pack 10.

The battery module 20 may include a plurality of battery cells 100 and a module case 21.

The battery cell 100 is as described above. In addition, a plurality of battery cells 100 are stacked and accommodated in the module case 21. The module case 21 surrounds the plurality of battery cells 100, thereby protecting the battery cells 100 from external vibrations or shocks.

The module case 21 may be formed in a shape corresponding to the shape of the stack in which the plurality of battery cells 100 are stacked. For example, if the stack in which the plurality of battery cells 100 are stacked is formed in a hexahedral shape, the module case 21 may also be formed in a hexahedral shape corresponding thereto. However, the present disclosure is not limited thereto. Here, the module case 21 may include an upper module case 21, a lower module case, and a side module case.

In addition, the module case 21 may be manufactured by, for example, bending a metal plate, and thus the module case 21 may be manufactured integrally. If the module case 21 is manufactured integrally, the coupling process is simplified and becomes easier. Alternatively, the module case 21 may be provided in a separate form and coupled by welding, etc. However, the material of the module case 21 is not limited to a metal material.

Here, the fireproofing member 300 coupled to module case 21 will not be described again.

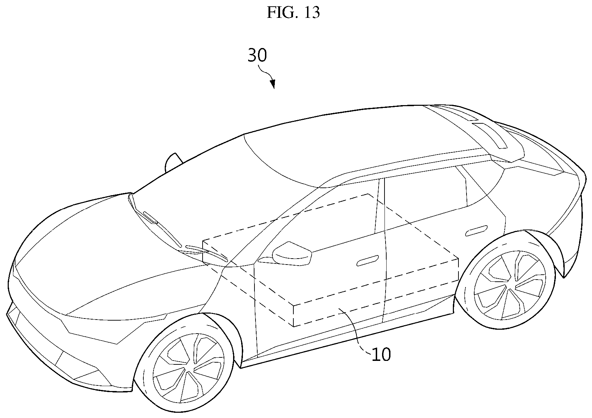

FIG. 13 is a drawing for illustrating a vehicle including the battery pack according to each embodiment of the present disclosure.

Referring to FIG. 13, the vehicle 30 according to an embodiment of the present disclosure may include one or more battery packs 10 according to each of the embodiments described above. Here, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery cells;
a pack case configured to accommodate the plurality of battery cells; and
a fireproofing member coupled to the battery cells and having a discharge portion formed therein.

2. The battery pack according to claim 1,
wherein the fireproofing member includes:
a first fireproofing sheet coupled to the battery cell and having a first discharge portion formed therein; and
a second fireproofing sheet coupled to the first fireproofing sheet and having a second discharge portion formed therein at a location spaced apart from the first discharge portion.

3. The battery pack according to claim 2,
wherein the first discharge portion and the second discharge portion are formed in the first fireproofing sheet and the second fireproofing sheet, respectively, at opposite positions.

4. The battery pack according to claim 2,
wherein based on a cross-section of the fireproofing member, the first discharge portion is located at a right side, and the second discharge portion is located at a left side rather than the first discharge portion.

5. The battery pack according to claim 2,
wherein based on a cross-section of the fireproofing member, the first discharge portion is located at a left side, and the second discharge portion is located at a right side rather than the first discharge portion.

6. The battery pack according to claim 2,
wherein the first discharge portion and the second discharge portion are configured to have different shapes.

7. The battery pack according to claim 2,
wherein the second discharge portion is formed to allow gas venting by rupturing when a thermal event occurs, and
wherein the second discharge portion is configured such that a part of the second discharge portion guides a movement of gas when the second discharge portion ruptures.

8. The battery pack according to claim 7,
wherein the second discharge portion includes:
a notching portion formed to rupture when a thermal event occurs; and
a guide portion deformed to be inclined to guide the movement of the gas when the notching portion ruptures.

9. The battery pack according to claim 8,
wherein the pack case includes an upper frame,
wherein a gas movement channel configured to discharge gas is formed between the upper frame and the second fireproofing sheet, and
wherein, when a thermal event occurs, the guide portion deforms and comes into contact with the upper frame.

10. The battery pack according to claim 8,
wherein the notching portion includes:
a reference line portion formed on the second fireproofing sheet; and
an extension portion extending from both ends of the reference line portion at a preset angle.

11. The battery pack according to claim 7,
wherein the second discharge portion includes:
a cutting portion formed on the second fireproofing sheet; and
a guide portion deformed to be inclined relative to the cutting portion to guide the movement of the gas when a thermal event occurs.

12. The battery pack according to claim 11,
wherein the pack case includes an upper frame,
wherein a gas movement channel configured to discharge gas is formed between the upper frame and the second fireproofing sheet, and
wherein, when a thermal event occurs, the guide portion deforms and comes into contact with the upper frame.

13. The battery pack according to claim 11,
wherein the cutting portion includes:
a reference line portion formed on the second fireproofing sheet; and
an extension portion extending from both ends of the reference line portion at a preset angle.

14. The battery pack according to claim 2,
wherein the first discharge portion is formed as a notching portion or a cutting portion formed in a straight or dotted line shape.

15. The battery pack according to claim 1,
wherein the pack case has a venting portion formed thereon.

16. The battery pack according to claim 15,
wherein the venting portion includes:
a venting hole through which gas generated from the battery cell is discharged; and
a venting valve configured to close the venting hole and be opened when an internal pressure of the pack case exceeds a preset value.

17. The battery pack according to claim 16,
wherein a gas movement channel configured to discharge gas is formed between the pack case and the fireproofing member, and
wherein the gas moves to the venting portion through the gas movement channel.

18. A vehicle comprising the battery pack according to any one of claims 1 to 17.
